Europäisches Patentamt

European Patent Office

Office européen des brevets

(19)

(11) Veröffentlichungsnummer: **0 273 133**
**A1**

(12) # EUROPÄISCHE PATENTANMELDUNG

(21) Anmeldenummer: 87115842.4

(22) Anmeldetag: 28.10.87

(51) Int. Cl.⁴ **B23K 11/10**

(30) Priorität: 30.12.86 DE 3644756

(43) Veröffentlichungstag der Anmeldung:
06.07.88 Patentblatt 88/27

(84) Benannte Vertragsstaaten:
CH DE ES FR GB IT LI

(71) Anmelder: **Heinz Finzer KG**
**Industriestrasse 9**
**D-7880 Bad Säckingen 11(DE)**

(72) Erfinder: **Wald, Robert**
**Martinsweg 72**
**D-7880 Bad Säckingen 11(DE)**

(74) Vertreter: **Winter, Konrad Theodor, Dipl.-Ing.**
**et al**
**Patentanwaltsbüro Tiedtke- Bühling- Kinne-**
**Grupe- Pellmann- Grams- Struif- Winter-**
**Roth Bavariaring 4**
**D-8000 München 2(DE)**

(54) **Vorrichtung zum Widerstandsschweissen.**

(57) Bei einer Vorrichtung zum Widerstandsschweißen mit zwei gegenüberliegenden, unter Krafteinwirkung aufeinander zu bewegbaren Elektroden (10,11), die jeweils von Strom durchflossenen Elek-trodenträgern (13,14) gehalten sind, wirkt zwischen den Elektrodenträgern (13,14) infolge des Schweißstroms eine elektromagnetische Kraft (Fe2). Erfindungsgemäß wird diese elektromagnetische Kraft zur Anhebung der Elektrodenkraft (F) genutzt, indem die voneinander weg gerichtete Bewegung der Elektrodenträger (13,14) infolge der elektromagnetischen Kraft (Fe2) in eine aufeinander zu gerichtete Bewegung der Elektroden (10,11) um-gesetzt wird. Da die elektromagnetische Kraft nur wirkt, wenn der Schweißstrom fließt, ist eine übermäßige Elektrodenkraft, die druckempfindliche zu verschweißende Bauteile vor dem Schweißvorgang beschädigen kann, vermieden und während des Schweißvorganges eine Nachführung der Elektroden und deren sicherer Kontakt mit den zu verschweißenden Bauteilen gewährleistet.

FIG. 1a

## Vorrichtung zum Widerstandsschweißen

Die Erfindung bezieht sich auf eine Vorrichtung zum Widerstandsschweißen gemäß dem Oberbegriff des Anspruchs 1.

Die bekannten Vorrichtungen zum Widerstandsschweißen weisen zwei gegenüberliegend angeordnete Elektroden auf, die an Elektrodenträgern derart gelagert sind, daß sie aufeinander zu bewegt werden können. Die Elektrodenträger dienen gleichzeitig als ein Abschnitt des Stromkreises, über den während des Schweißvorganges die Elektroden mit Strom versorgt werden. Zur Ausführung des Schweißvorganges werden zu verschweißende Bauteile zwischen den Elektroden angeordnet und die Elektroden werden mit den Bauteilen in Kontakt gebracht. Nach Anlage einer Spannung bzw. nach Fließen des Schweißstroms werden die zu verschweißenden Bauteile von Strom durchflossen und es entsteht aufgrund des relativ großen Widerstandes Wärme, die die Oberfläche der zu verschweißenden Bauteile aufschmilzt und miteinander verschweißt. Dabei tritt eine Verrringerung der in Axialrichtung der Elektroden gemessenen Abmessung der Bauteile auf, die durch eine Nachführung zumindest einer Elektrode ausgeglichen werden muß, um den Kontakt zwischen den Elektroden und den Bauteilen aufrecht zu erhalten. Die Elektroden sind deshalb mittels eines federnden Elementes gegeneinander vorgespannt. Diese sog. Elektrodenkraft gewährleistet sowohl vor dem Schweißen eine ausreichende Lagesicherung der zu verschweißenden Bauteile als auch während des Schweißvorganges eine Nachführung der Elektroden und deren ständigen Kontakt mit den Bauteilen.

Beim Schweißen von Bauteilen aus hochleitenden Werkstoffen, etwa von Feinsilber-Kontaktplättchen, muß zur Durchführung einer Widerstandsschweißung der Übergangswiderstand an der Schweißstelle zu Beginn der Schweißung möglichst groß sein. Aus diesem Grunde werden die Feinsilber-Kontaktplättchen mit Lagerungsspitzen ausgebildet, so daß sie mit dem Bauteil, mit dem sie verschweißt werden sollen, etwa einem Kontaktträger, über Punkt-oder Linienkontakt und nicht über Flächenkontakt in Berührung stehen. Die Elektrodenkraft muß dabei so gering gewählt werden, daß die Lagerungsspitzen nicht beschädigt werden oder in den Kontaktträger eindringen. Eine derartig geringe Elektrodenkraft gewährleistet aber nicht, daß die Elektroden in optimaler Weise nachgeführt werden.

Die Elektrodenträger bestehen üblicherweise aus zwei im wesentlichen geraden, parallel zueinander verlaufenden Stromanschlußschienen, die jeweils an ihrem einen Ende die Elektroden tragen und an ihrem anderen Ende mit Anschlußkabeln verbunden sind. Die Stromanschlußschienen sind derart relativ zueinander bewegbar gelagert, daß die an den Stromanschlußschienen gehaltenen Elektroden aufeinander zu bewegt werden können. Bei Anlage einer Spannung werden die Stromanschlußschienen in Gegenrichtung zueinander von Strom durchflossen. Das bei derart anti-parallel durchflossenen Leitern auftretende magnetische Feld erzeugt eine elektromagnetische Kraft, die die Stromanschlußschienen voneinander weg bewegt. Die elektromagnetische Kraft wirkt der Elektrodenkraft entgegen, so daß die Vorspannung der Elektroden gegen die zu verschweißenden Bauteile verringert wird. Beim Schweißen von Bauteilen aus hochleitenden Werkstoffen ist eine hohe Stromstärke erforderlich, um die in Punktkontakt miteinander in Anlage befindlichen Bauteile zu verschweißen. Infolge der hohen Stromstärke, die beim Schweißen von Feinsilber-Kontaktplättchen mehrere tausend A betragen kann, erhöht sich die zwischen den Stromanschlußschienen wirkende elektromagnetische Kraft wesentlich, so daß die infolge des federnden Elementes wirkende Elektrodenkraft weitgehend kompensiert wird. Es ist sogar möglich, daß die elektromagnetische Kraft zu einem Abheben der Elektroden von den zu verschweißenden Bauteilen führt, was ein Schweißen dieser Bauteile unmöglich macht. Eine Erhöhung der Vorspannung der Elektroden ist nicht möglich, da dadurch die Lagerungsspitzen beschädigt oder in den Kontaktträger hineingedrückt werden. Der Punktkontakt zwischen beispielsweise den Feinsilber-Kontaktplättchen und dem Kontaktträger wäre dadurch nicht mehr gegeben. Aufgrund des dann herrschenden Flächenkontaktes zwischen den zu verschweißenden Bauteilen aus hochleitenden Werkstoffen wäre eine Ausbildung einer ordnungsgemäßen Schweißverbindung nicht möglich.

Der Erfindung liegt die Aufgabe zugrunde, eine Vorrichtung zum Widerstandsschweißen zu schaffen, die auch das Schweißen druckempfindlicher Bauteile ermöglicht und eine ausreichende Nachführung der Elektroden sowie deren ständige Anlage an den zu verschweißenden Bauteilen gewährleistet.

Diese Aufgabe wird erfindungsgemäß durch die Vorrichtung zum Widerstandsschweißen gemäß Patentanspruch 1 gelöst.

Durch die Nutzung der zwischen den Elektrodenträgern bei der Schweißstromzuführung entstehenden elektromagnetischen Kraft zur Anhebung der Elektrodenkraft kann die Elektrodenkraft infolge des federnden Elementes gering gehalten werden, so daß druckempfindliche, zu verschweißende Bauteile vor dem Schweißen nicht beschädigt werden. Während des Schweißvorganges wirkt zusätzlich die elektromagnetische Kraft, so daß eine selbstgesteuerte Vorrichtung erreicht ist, die eine Nachführung der Elektroden und deren sicherer Kontakt mit den zu verschweißenden Bauteilen gewährleistet.

Die Umsetzung der Bewegung der Elektrodenträger gemäß Anspruch 2 erlaubt die Nutzung der elektromagnetischen Kraft zur Anhebung der Elektrodenkraft unter Verwendung relativ einfacher mechanischer Vorrichtungen. Einen besonders einfachen und leicht zu realisierenden Aufbau weist die Vorrichtung gemäß Anspruch 3 auf. Durch diese sich kreuzende Anordnung der Elektrodenträger ist eine Umsetzung ihrer Bewegung ohne Zwischenschaltung etwa eines Getriebes ermöglicht.

Die Ausbildung eines Abschnittes eines Elektrodenträgers in Form eines Portals gemäß Anspruch 4 ermöglicht es, den anderen Elektrodenträger geradlinig auszubilden und trotzdem die sich kreuzende Anordnung der Elektrodenträger zu erreichen, ohne daß diese sich bei einer gegenseitigen Bewegung behindern. Die Ausbildung eines c-förmigen Ab schnittes gemäß Anspruch 5 verringert den erforderlichen Bauraum gegenüber dem portalartigen Abschnitt gemäß Anspruch 4 wesentlich.

Die Anbringung einer Verstellvorrichtung gemäß Anspruch 6 ermöglicht es, die elektromagnetische Kraft unabhängig von der Stromstärke zu ändern, ohne die Vorrichtung ausbauen zu müssen. Eine derartige Verstellvorrichtung kann beispielsweise eine Vorrichtung sein, die die Höhe des Portals gemäß Anspruch 4 oder des c-förmigen Abschnittes gemäß Anspruch 5 mittels einer Einschubvorrichtung verändern kann.

Durch die Zwischenschaltung eines Gelenkes zwischen die Elektrodenträger gemäß Anspruch 7 wirken die Elektrodenträger als Hebel. Dadurch ist ein sehr wirksamer, mechanisch einfacher Aufbau zur Umsetzung der Bewegung der Elektrodenträger erreicht. Eine Verstellung der Position des Gelenkes an den Elektrodenträgern gemäß Anspruch 8 erlaubt infolge der Änderung der Hebelarme eine Einstellung der elektromagnetischen Kraft unabhängig von der Änderung der Stromstärke. Dabei kann bei Anordnung des Gelenkes in der Mitte der Elektrodenträger auch eine Nullstellung erreicht werden, in der die elektromagnetische Kraft keinen Einfluß auf die Elektrodenkraft hat.

Um ein Verkanten der Elektroden bei ihrer aufeinander zu gerichteten Bewegung zu vermeiden, ist die Ausbildung gemäß Anspruch 9 sehr wirkungsvoll. Bei Anordnung einer Führungsvorrichtung, die den Elektroden eine ausgerichtete gegenseitige Bewegung aufzwängt, und bei einer gelenkigen Befestigung der Elektroden an den Elektrodenträgern ist trotz der kreisförmigen Schwenkbewegung der Elektrodenträger eine geradlinige, aufeinander zugerichtete Bewegung der Elektroden gewährleistet.

Weitere Ziele, Anwendungen und Vorteile der Erfindung werden aus der folgenden ausführlichen Beschreibung einiger bevorzugter Ausführungsbeispiele unter Bezugnahme auf die beigefügten Zeichnungen vollständig ersichtlich.

Fig. 1a zeigt die Ausbildung und Anordnung der Stromanschlußschienen gemäß einem ersten Ausführungsbeispiel der Erfindung in Seitenansicht,

Fig. 1b zeigt eine Vorderansicht der Stromanschlußschienen gemäß Fig. 1a,

Fig. 2a zeigt die Ausbildung und Anordnung der Stromanschlußschienen gemäß einem zweiten Ausführungsbeispiel der Erfindung in Seitenansicht,

Fig. 2b zeigt eine Vorderansicht der Stromanschlußschienen gemäß Fig. 2a und

Fig. 3 zeigt die Ausbildung und Anordnung der Stromanschlußschienen gemäß einem dritten Ausführungsbeispiel der Erfindung in Seitenansicht.

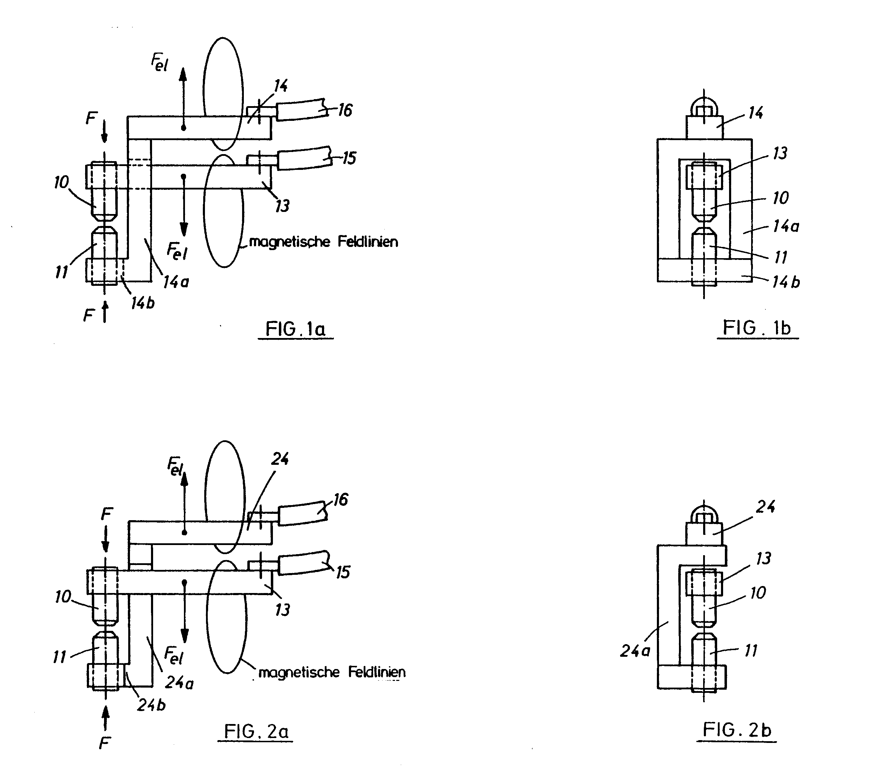

Eine Vorrichtung zum Widerstandsschweißen weist zwei übereinander angeordnete Stromanschlußschienen 13 und 14 auf, die an ihrem einen Ende jeweils mit einem Anschlußkabel 15 bzw. 16 verbunden sind. Die untere Stromanschlußschiene 13 ist im wesentlichen geradlinig ausgebildet und trägt an ihrem anderen Ende eine Oberelektrode 10. Die obere Stromanschlußschiene 14 weist einen vertikal verlaufenden Abschnitt 14a auf, an dessen unterem Ende ein flanschartiger Vorsprung 14b ausgebildet ist. Am flanschartigen Vorsprung 14b ist eine Unterelektrode 11 gehalten, die der Oberelektrode 10 gegenüberliegend angeordnet ist. Der vertikal verlaufende Abschnitt 14a der oberen Stromanschlußschiene 14 ist in Form eines Portals ausgebildet, das die untere Stromanschlußschiene 13 beidseitig umgreift bzw. umgeht, wie es in Fig. 1b dargestellt ist. Auf diese Weise ist die Oberelektrode 10 an der unteren Stromanschlußschiene 13 und die Unterelektrode 11 an der oberen Stromanschlußschiene 14 gehalten, ohne daß sich die Stromanschlußschienen 13 und 14 gegenseitig behindern.

Die Stromanschlußschienen 13 und 14 sind mittels einer nicht dargestellten Halterung relativ zueinander verschieblich gelagert, so daß die Ober- und die Unterelektrode 10 bzw. 11 aufeinander zu, d.h. in Schließrichtung bzw. voneinander weg, d.h. in Öffnungsrichtung, bewegt werden können. Die Elektroden 10 und 11 stehen mittels eines nicht dargestellten elastischen Elementes, etwa einer Feder, unter einer Elektrodenkraft bzw. einer Vorspannkraft F, die die Elektroden 10 und 11 in Schließrichtung drängt.

Zur Durchführung des Schweißens werden nicht dargestellte, zu verschweißende Bauteile zwischen der Oberelektrode 10 und der Unterelektrode 11 angeordnet. Infolge der Elektrodenkraft F werden die Bauteile mit den Elektroden 10 und 11 in Kontakt gebracht und in gewünschter Weise positioniert. Die Elektrodenkraft F kann bei empfindlichen Bauteilen sehr gering gewählt werden, da sie im wesentlichen nur der Positionierung der Bauteile und der Aufrechterhaltung des Kontaktes der Bauteile mit den Elektroden 10 und 11 vor dem eigentlichen Schweißvorgang dient.

Wenn die zu verschweißenden Bauteile exakt positioniert sind, wird für eine vorbestimmte Zeitdauer zwischen der Oberelektrode 10 und der Unterelektrode 11 eine Spannung angelegt und es fließt ein Strom geeigneter Stromstärke. Der Strom fließt beispielsweise vom Anschlußkabel 15 über die untere Stromanschlußschiene 13 und die Oberelektrode 10, durch die nicht dargestellten zu verschweißenden Bauteile und über die Unterelektrode 11 und die obere Stromanschlußschiene 14 in das Anschlußkabel 16. Je nach Anschluß der Anschlußkabel 15 und 16 kann der Strom auch in umgekehrter Richtung fließen. In beiden Fällen werden die obere und die untere Stromanschlußschiene in unterschiedlichen Richtungen durchflossen. Bei der oben beschriebenen Fließrichtung fließt der Strom in der unteren Stromanschlußschiene 13 gemäß Fig. 1a von rechts nach links und in der oberen Stromanschlußschiene 14 von links nach rechts. Die Stromanschlußschienen 13 und 14 stellen demgemäß anti-parallel durchflossene Leiter dar, die ein elektromagnetisches Feld erzeugen. Die magnetischen Feldlinien sind beispielshaft in Fig. 1a dargestellt. Die Stromanschlußschienen 13 und 14 stoßen sich gegenseitig mit einer elektromagnetischen Kraft $F_{el}$ ab, deren Wirkungsrichtung in Fig. 1a dargestellt ist. Die abstoßende elektromagnetische Kraft $F_{el}$ ist der Elektrodenkraft F gleichgerichtet und bewirkt eine Bewegung der Ober-und der Unterelektrode 10 bzw. 11 in Schließrichtung, wodurch während des Schweißvorgangs eine Nachführung der Elektroden bzw. ein ständiger Kontakt der Elektroden mit den zu verschweißenden Bauteilen sichergestellt ist. Auf diese Weise wirkt unmittelbar vor dem Schweißvorgang, d.h. bevor ein Strom fließt, im wesentlichen nur die Elektrodenkraft F auf die Elektroden bzw. die zu verschweißenden Bauteile ein. Während des Schweißvorganges, d.h. während ein Strom fließt, wirkt zusätzlich zu der Elektrodenkraft F die elektromagnetische Kraft $F_{el}$, die der Elektrodenkraft F gleichgerichtet ist.

Beim Schweißen von Bauteilen aus hochleitenden Werkstoffen, etwa von Feinsilber-Kontaktplättchen, kann mittels einer relativ geringen Elektrodenkraft F vor dem Schweiß vorgang eine sichere Positionierung der zu verschweißenden Bauteile, z.B. in gegenseitigem Punktkontakt, erreicht werden, ohne daß die Bauteile beschädigt werden. Während des Schweißvorganges ist aufgrund der zusätzlich wirkenden elektromagnetischen Kraft $F_{el}$ der Kontakt der Elektroden mit den zu verschweißenden Bauteilen gewährleistet.

In den Fig. 2a und 2b ist ein weiteres Ausführungsbeispiel der Erfindung dargestellt. Der grundsätzliche Aufbau und die Wirkungsweise dieses Ausführungsbeispiels entsprechen dem Aufbau und der Wirkungsweise des ersten Ausführungsbeispiels gemäß den Fig. 1a und 1b, so daß an dieser Stelle darauf nicht eingegangen werden soll. Gleiche Bauteile, die in beiden Ausführungsbeispielen Verwendung finden, sind mit denselben Bezugszeichen versehen. Wie den Fig. 2a und 2b zu entnehmen ist, weist eine obere Stromanschlußschiene 24 einen vertikal verlaufenden Abschnitt 24a und einen flanschartigen Ansatz 24b auf. Der vertikal verlaufende Abschnitt 24a der oberen Stromschiene 24 ist in Gestalt eines c-förmigen Bügels ausgebildet, der die untere Stromanschlußschiene 13 einseitig umgreift. Dadurch ist der benötigte Bauraum für den vertikal verlaufenden Abschnitt 24a gegenüber dem vertikal verlaufenden Abschnitt 14a gemäß dem ersten Ausführungsbeispiel erheblich verringert. Es sind viele weitere Ausbildungsformen möglich, um die obere Stromanschlußschiene 14 mit der Unterelektrode 11 und die untere Stromanschlußschiene 13 mit der Oberelektrode 10 zu verbinden. Es ist selbstverständlich auch möglich, die obere Stromanschlußschiene 14 geradlinig auszubilden und die untere Stromanschlußschiene 13 unter Umgehung der Stromanschlußschiene 14 mit der Oberelektrode 13 zu verbinden.

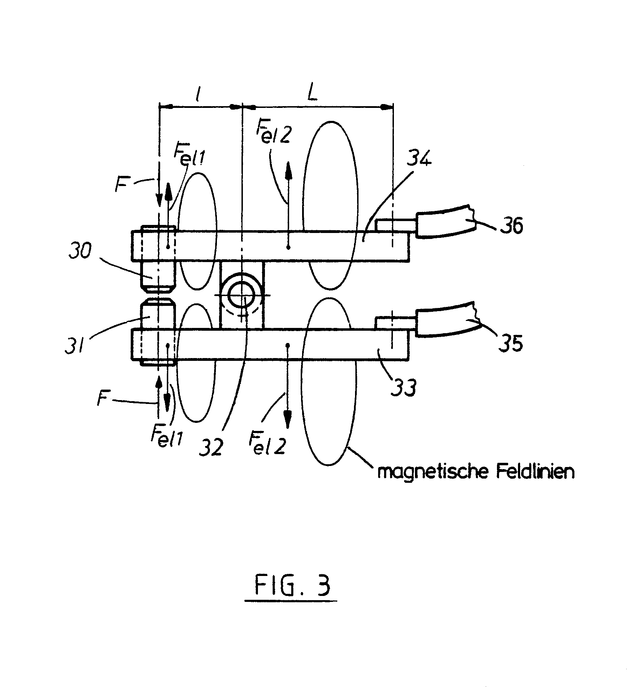

Eine Vorrichtung zum Widerstandsschweißen, wie sie in Fig. 3 als weiteres Ausführungsbeispiel der Erfindung darge stellt ist, weist eine obere Stromanschlußschiene 34, die an ihrem einen Ende mit einem Anschlußkabel 36 und an ihrem anderen Ende mit einer Oberelektrode 30 versehen ist, und eine untere Stromanschlußschiene 33 auf, die an ihrem einen Ende mit einem Anschlußkabel 35 und an ihrem anderen Ende mit einer Unterelektrode 31 versehen ist, so daß die Oberelektrode 30 und die Unterelektrode 31 gegenüberliegend angeordnet sind. Die obere und die untere Stromanschlußschiene 34 bzw. 33 sind übereinander angeordnet und verlaufen im wesentlichen parallel zueinander. An einer von der Mitte der Stromanschlußschienen 33 und 34 in Richtung der Elektroden 30 und 31 versetzten Position sind die obere Stromanschlußschiene 34 und die untere Stromanschlußschiene 33 mittels eines isolierten Gelenkes 32 miteinander derart verbunden, daß sie relativ zueinander -

schwenkbar sind. Jede Stromanschlußschiene 33 bzw. 34 weist einen ersten Hebelarm der Länge l, der zwischen dem Drehpunkt des isolierten Gelenkes 32 und dem Mittelpunkt der jeweiligen Elektrode 30 bzw. 31 verläuft, und einen zweiten Hebelarm der Länge L auf, der zwischen dem Drehpunkt des isolierten Gelenkes 32 und dem Anschlußpunkt des jeweiligen Anschlußkabels 35 bzw. 36 verläuft. Die Länge L des zweiten Hebelarms ist dabei gemäß Fig. 3 größer als die Länge l des ersten Hebelarms. Die Elektroden 30 und 31 stehen mittels eines nicht dargestellten elastischen Elementes, etwa einer Feder, unter einer Elektrodenkraft bzw. einer Vorspannkraft F, die die Elektroden 30 und 31 in Schließrichtung drängt.

Wenn bei der Durchführung des Schweißens für eine vorbestimmte Zeitdauer zwischen der Oberelektrode 30 und der Unterelektrode 31 eine Spannung angelegt wird, fließt ein Strom geeigneter Stromstärke. Die Stromanschlußschienen 33 und 34 stellen demgemäß anti-parallel durchflossene Leiter dar, die ein elektromagnetisches Feld erzeugen. Die magne tischen Feldlinien sind beispielhaft in Fig. 3 dargestellt. Die Stromanschlußschienen 33 und 34 stoßen sich gegenseitig mit einer elektromagnetischen Kraft $F_{el1}$ und $F_{el2}$ ab, die bezüglich des Drehpunktes entgegengesetzt wirkende Drehmomente erzeugen. Da der zweite Hebelarm länger als der erste Hebelarm ist, ist die elektromagnetische Kraft $F_{el2}$ größer als die elektromagnetische Kraft $F_{el1}$. Damit verbleibt ein resultierendes Drehmoment, das die Ober-und die Unterelektrode in Schließrichtung drängt. Infolge des zum Schweißen erforderlichen Stroms wird die Elektrodenkraft F demzufolge erhöht. Vor dem Schweißvorgang, d.h. bevor der Strom fließt, wirkt im wesentlichen lediglich die Elektrodenkraft F auf die Elektroden bzw. die zu verschweißenden Bauteile ein, so daß durch Wahl einer geringen Elektrodenkraft F die empfindlichen Bauteile sicher positioniert werden können, ohne daß sie beschädigt werden. Während des Schweißvorganges gewährleistet die infolge des resultierenden Drehmomentes zusätzlich auf die Elektroden einwirkende Kraft den ständigen Kontakt der Elektroden mit dem zu verschweißenden Bauteilen und eine sichere Nachführung der Elektroden.

Um eine gegenseitige Verkantung der Elektroden 30 und 31 infolge der gegenseitigen Schwenkung der oberen und der unteren Stromanschlußschiene 33 und 34 zu verhindern, können die Elektroden 30 und 31 schwenkbar an der jeweiligen Stromanschlußschiene 33 bzw. 34 gelagert und mittels einer nicht dargestellten Führungseinrichtung bei ihrer gemäß Fig. 3 vertikalen Bewegung derart geführt sein, daß die Ober- und die Unterelektrode 30 bzw. 31 immer vollflächig in Anlage mit den zu verschweißenden Bauteilen gerät.

Die Größe der elektromagnetischen Kraft ist von vielen Parametern, beispielsweise dem Abstand zwischen den Strom anschlußschienen, deren Werkstoff, der Stromstärke und der Länge der Stromanschlußschienen abhängig. Um die elektromagnetische Kraft ohne weitreichende bauliche Maßnahmen einstellen zu können, kann bei dem ersten und zweiten Ausführungsbeispiel beispielsweise eine Vorrichtung vorgesehen sein, mit der der Abstand zwischen den Stromanschlußschienen variierbar ist, ohne daß der Abstand zwischen den Elektroden verändert wird. Bei dem dritten Ausführungsbeispiel gemäß Fig. 3 kann beispielsweise die Länge der Hebelarme verändert werden, indem der Drehpunkt bzw. das isolierte Gelenk entlang der Stromanschlußschiene verschiebbar ist. Dadurch ist es auch möglich, die elektromagnetische Kraft so einzustellen, daß das resultierende Moment null ist, oder, falls dies in Einzelfällen erforderlich sein sollte, daß das resultierende Moment der Elektrodenkraft F entgegenwirkt.

Abweichend von den im vorstehenden beschriebenen Ausführungsbeispielen kann die voneinander weg gerichtete Bewegung auch auf andere Weise in die aufeinander zu gerichtete Bewegung der Elektroden umgesetzt werden. Beispielsweise kann ein Getriebe zwischengeschaltet werden, um gegebenenfalls ein bestimmtes Über-oder Untersetzungsverhältnis zu erreichen. Statt gegeneinander parallel verschieblich können die Stromanschlußschienen gegeneinander schwenkbar angeordnet sein, indem sie auf ihrer mit den Anschlußkabeln versehenen Seite gelenkig an einem festen Gehäuseteil angeschlossen sind. Dabei ist es vorteilhaft, wenn ein gegenseitiges Verkanten der Elektroden mittels einer Führungsvorrichtung in oben beschriebener Weise vermieden wird. Desweiteren können die Stromanschlußschienen auch fest an dem Gehäuseteil angebracht sein, so daß eine gegenseitige Bewegung der Stromanschlußschienen über ihre elastische Verformung infolge der elektromagnetischen Kraft erfolgt. Da die Größe der elektro magnetischen Kraft von dem Abstand der Stromanschlußschienen abhängt, ist es möglich, über die Formgebung der Stromanschlußschienen einen gewünschten Verlauf der elektromagnetischen Kraft über die Zeit während der Einschaltphase zu erzielen, bis sich die elektromagnetische Kraft auf ein festes, vorbestimmtes Niveau einstellt.

Bei einer Vorrichtung zum Widerstandsschweißen mit zwei gegenüberliegenden, unter Krafteinwirkung aufeinander zu bewegbaren Elektroden, die jeweils von Strom durchflossenen Elektrodenträgern gehalten sind, wirkt zwischen den Elektrodenträgern infolge des Schweißstroms eine elektromagnetische Kraft. Erfindungsgemäß wird diese elektromagnetische Kraft zur Anhebung der Elektrodenkraft genutzt, indem die voneinander weg gerichtete Bewegung der Elektrodenträger infolge der elektromagnetischen Kraft in eine aufeinander zu gerichtete Bewegung der Elektroden umgesetzt wird. Da die elektromagnetische Kraft nur wirkt, wenn der Schweißstrom fließt, ist eine übermäßige Elektrodenkraft, die druckempfindliche zu verschweißende Bauteile vor dem Schweißvorgang beschädigen kann, vermieden und während des Schweißvorganges eine Nachführung der Elektroden und deren sicherer Kontakt mit den zu verschweißenden Bauteilen gewährleistet.

Bei einer Vorrichtung zum Widerstandsschweißen mit zwei gegenüberliegenden, unter Krafteinwirkung aufeinander zu bewegbaren Elektroden, die jeweils von Strom durchflossenen Elektrodenträgern gehalten sind, wirkt zwischen den Elektrodenträgern infolge des Schweißstroms eine elektromagnetische Kraft. Erfindungsgemäß wird diese elektromagnetische Kraft zur Anhebung der Elektrodenkraft genutzt, indem die voneinander weg gerichtete Bewegung der Elektrodenträger infolge der elektromagnetischen Kraft in eine aufeinander zu gerichtete Bewegung der Elektroden umgesetzt wird. Da die elektromagnetische Kraft nur wirkt, wenn der Schweißstrom fließt, ist eine übermäßige Elektrodenkraft, die druckempfindliche zu verschweißende Bauteile vor dem Schweißvorgang beschädigen kann, vermieden und während des Schweißvorganges eine Nachführung der Elektroden und deren sicherer Kontakt mit den zu verschweißenden Bauteilen gewährleistet.

**Ansprüche**

1. Vorrichtung zum Widerstandsschweißen mit zwei gegenüberliegenden, unter Krafteinwirkung aufeinander zu bewegbaren Elektroden, die jeweils von Strom durchflossenen Elektrodenträgern gehalten werden, dadurch gekennzeichnet, daß die bei der Schweißstromzuführung zwischen den Elektrodenträgern entstehende elektromagnetische Kraft zur Anhebung der Elektrodenkraft genutzt wird.

2. Vorrichtung nach Anspruch 1, wobei die Elektrodenträger von einer oberen bzw. rechten, ersten und einer unteren bzw. linken, zweiten Stromanschlußschiene, die im wesentlichen parallel zueinander verlaufen, und die Elektroden von einer oberen bzw. rechten, ersten und einer unteren bzw. linken, zweiten Elektrode gebildet sind, und wobei die elektromagnetische Kraft, die zwischen den Stromanschlußschienen wirkt, die Stromanschlußschienen voneinander weg bewegt, dadurch gekennzeichnet, daß die voneinander weg gerichtete Bewegung der Stromanschlußschienen in eine aufeinander zu gerichtete Bewegung der Elektroden umgesetzt wird.

3. Vorrichtung nach Anspruch 2, dadurch gekennzeichnet, daß die erste Elektrode (10) mit der zweiten Stromanschlußschiene (13) und die zweite Elektrode (11) mit der ersten Stromanschlußschiene (14, 24) in Verbindung steht.

4. Vorrichtung nach Anspruch 3, dadurch gekennzeichnet, daß eine Stromanschlußschiene (13) geradlinig verläuft, während die andere Stromanschlußschiene (14) diese mittels eines portalartig ausgebildeten Abschnittes (14a) umgeht.

5. Vorrichtung nach Anspruch 3, dadurch gekennzeichnet, daß eine Stromanschlußschiene (13) geradlinig verläuft, während die andere Stromanschlußschiene (24) diese mittels eines c-förmig ausgebildeten Abschnittes (24a) umgeht.

6. Vorrichtung nach einem der Ansprüche 1 bis 5, gekennzeichnet durch eine Verstellvorrichtung zur Änderung des gegenseitigen Abstandes der Elektrodenträger ohne Änderung des gegenseitigen Abstandes der Elektroden.

7. Vorrichtung nach Anspruch 2, dadurch gekennzeichnet, daß die erste und zweite Stromanschlußschiene (33, 34) mittels eines isolierten Gelenkes (32) verbunden sind, so daß jede Stromanschlußschiene einen ersten Hebelarm der Länge I, der an seinem freien Ende die Elektrode (30 bzw. 31) trägt, und einen zweiten Hebelarm der Länge L aufweist, wobei die Länge L größer oder gleich der Länge I ist.

8. Vorrichtung nach Anspruch 7, dadurch gekennzeichnet, daß die Position des Gelenkes (32) bezüglich der Stromanschlußschienen (33, 34) verstellbar ist.

9. Vorrichtung nach Anspruch 7 oder 8, dadurch gekennzeichnet, daß die Elektroden (30, 31) gelenkig an den Stromanschlußschienen (33, 34) befestigt und mittels einer Führungsvorrichtung in ihrer aufeinander zu gerichteten Bewegung geführt sind.

$F_{el}$

14

16

F

15

10

13

11

$F_{el}$

magnetische Feldlinien

14a

14b

F

**FIG. 1a**

14

13

10

14a

11

14b

**FIG. 1b**

$F_{el}$

24

16

F

15

10

13

11

$F_{el}$

magnetische Feldlinien

24a

24b

F

**FIG. 2a**

24

13

10

24a

11

**FIG. 2b**

0 273 133

magnetische Feldlinien

FIG. 3

Europäisches Patentamt

**EUROPÄISCHER RECHERCHENBERICHT**

Nummer der Anmeldung

EP 87115842.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | <u>DE - B - 1 207 031</u> (ATOMIC ENERGY) <br> * Fig. 1 * <br> -- | 1,2 | B 23 K 11/10 |
| A | <u>US - A - 2 863 986</u> (MECKLENBORG) <br> * Fig. 1 * <br> -- | 1,2 | |
| A | <u>DE - A1 - 3 327 882</u> (BIOTECO) <br> * Fig. 3 * <br> ---- | 7 | |

| | RECHERCHIERTE SACHGEBIETE (Int. Cl.4) |
|---|---|
| | B 23 K 11/00 |

Der vorliegende Recherchenbericht wurde für alle Patentansprüche erstellt.

| Recherchenort | Abschlußdatum der Recherche | Prüfer |
|---|---|---|
| WIEN | 10-03-1988 | BENCZE |